# EUROPEAN PATENT APPLICATION

(11) **EP 0 645 211 A2**
(43) Date of publication of application: **29.03.1995**
(21) Application number: 94115303.3
(22) Date of filing: 28.09.1994
(51) Int. Cl.: B23K 26/16

(54) **Laser beam emission unit, laser beam processing apparatus and method**

(30) Priority: 28.09.1993 JP 241563/93
(71) Applicant: MITSUI PETROCHEMICAL INDUSTRIES, LTD., Tokyo 100 (JP); MIYACHI TECHNOS CORPORATION, Noda City, Chiba 278 (JP)
(72) Inventor: Terashi, Yuichiro, c/o Mitsui Petrochem. Ind.,Ltd., Sodegaura-shi, Chiba (JP); Haruta, Koichi, c/o Mitsui Petrochem. Ind.,Ltd., Sodegaura-shi, Chiba (JP)
(74) Representative: Lehn, Werner, Dipl.-Ing.

(57) **Abstract**

A laser processing apparatus for processing a workpiece through irradiation with a laser beam has an intervening member (9) including a resin material and transmitting the laser beam in a laser beam passage space between a concentrating lens (4) for condensing the laser beam and the workpiece. As a result, the frequency of maintenance, operation hours, and running costs can be reduced while the processing reliability is greatly improved.

## Description

### FIELD OF THE INVENTION

The present invention relates to a laser processing apparatus and, more particularly, to a laser machining apparatus equipped with a laser irradiation apparatus for irradiating a workpiece with a laser beam.

### BACKGROUND OF THE INVENTION

Laser beam machining apparatuses, which machine a workpiece by means of a laser beam, are used for a variety of applications such as cutting, welding, drilling, marking, and surface reforming.

This type of laser beam machining apparatus has various optical systems between a laser oscillator and a workpiece to concentrate a laser beam emitted from the laser oscillator into a suitable beam diameter for an intended purpose. The optical systems are provided at their end with a concentrating lens for condensing the laser beam onto the workpiece, thus causing the laser beam to have suitable energy density for the intended purpose.

In the meantime, laser machining causes fusion and evaporation of a workpiece material due to irradiation with a high-energy-density laser beam, leading to a phenomenon in which fused particles of the workpiece material or of compounds including elements the workpiece material are scattered at high speed. Part of the scattered particles, generally referred to as spatters, reach the concentrating lens, and may adhere to its surface or stain or damage it. Accordingly, there arises a need of frequent cleaning or replacement of the concentrating lens, and these additional operations, coupled with an optical axis alignment operation, cause the problems of suspension of production and an increase in production costs.

Since the stain and damage on the concentrating lens cause a variation in the laser output in a short time, they raise a problem in the machining reliability.

As the solutions to these problems, there have conventionally been proposed a method in which spatters are blown off by an air blow provided between the concentrating lens and the workpiece (as disclosed in Japanese Unexamined Patent Publication No. Sho. 59-223191), and a method which prevents the concentrating lens from being stained or damaged by interposing a light transmissive aperture between the concentrating lens and the workpiece (as disclosed, for example, in Japanese Unexamined Patent Publication No. Hei. 5-38594). It is also conceivable to combine these two methods.

Although the first method of using the air blow can somewhat reduce the frequency of replacing the concentrating lens, there still remains the apprehension that part of spatters may not be blown off with the air blow to stain or damage to the concentrating lens, because the spatters are scattered very fast.

Although the second conventional method of inserting a glass plate (protective glass plate) or some other transparent member between the concentrating lens and the workpiece eliminates the need of the optical axis alignment operation, there still remains the need of frequently replacing the glass plate with little hope for improved machining reliability.

### SUMMARY OF THE INVENTION

An object of the present invention is to provide a laser machining apparatus and method adapted to reduce the frequency of replacement of the concentrating lens and the protective glass plate in laser machining, and ensure high machining reliability for a long period.

To achieve the foregoing object, the present invention incorporates the following features.

According to an aspect of the present invention, the improvement of a laser emission unit for use with a processing apparatus comprises an intervening member comprising a layer of resin material capable of transmitting a laser beam therethrough, said member being positioned between the concentrating lens and the workpiece, whereby the intervening member protects the concentrating lens from spatters generated upon irradiation of the workpiece with the laser beam during operation of the laser processing apparatus.

The intervening member means a member that transmits the laser beam but interrupts spatters and other substances.

While spatters adhere to a glass member and a lens in the conventional arrangements, a resin member repels such spatters in the present invention, to greatly restrain the light transmittance reduction due to adhesion of spatters to thereby improve the machining reliability. Obviously, the resin member may be used in combination with the conventionally known glass member as will be described later in detail.

A layer of resin material means resin plate, resin sheet or resin film.

According to another aspect of the present invention, the intervening member has a light transmittance of 80% or more at a wavelength of the laser beam emitted from a laser device.

The light transmittance of 80% or more allows irradiation of a workpiece with a high-energy-density laser beam and restrains the member temperature rise due to absorption of the laser beam. Further, with the light transmittance of 80% or more, the light transmittance reduction due to adhesion of spatters is small and, therefore, the intervening member is suitable for actual use.

It is to be noted that the light transmittance of 80% or more applies to both cases where the intervening member is provided with an anti-reflection coating (described below) and where it is provided with no such coating. The member may be provided with the anti-reflection coating to increase the light transmittance in certain applications involving irradiation of a workpiece with a high-energy-density laser beam.

According to another aspect of the present invention, the intervening member may be composed of a plate made of the above-mentioned resin material and having an anti-reflection coating on at least one face thereof.

According to another aspect of the present invention, the intervening member may be composed of a glass plate and a layer made of the above-mentioned resin material and formed on at least one face of the glass plate. That is, forming the resin layer on the conventionally known glass-plate member has the effect of restraining adhesion of spatters without causing any changes in the internal structure of an existing laser beam emission unit.

According to the present invention, the resin member repels spatters, which adhere to the conventionally known glass member, thus greatly restraining the light transmittance reduction due to adhesion of spatters. This realizes reductions of the frequency of maintenance operations, operation hours, and running costs, as well as a substantial improvement in the laser machining reliability.

Intervening member including resin material may be resin plate, resin sheet, resin film.

Further, the intervening member may be used in combination with the glass plate. More specifically, the intervening member may be provided between the glass plate and the workpiece, or attached to one face of the glass plate.

According to another aspect of the present invention, a laser emission unit of a laser processing apparatus for processing a workpiece, said unit comprising: a unit body member having an input opening at one end thereof receiving a laser beam and a second opening at the opposite end thereof, a concentrating lens disposed within said body member for concentrating a laser beam passing through said body member, a unit tip member removably connected to said unit body member, said unit tip member having a first open end removably connectable to said unit body member and a second open laser beam outlet end, and an intervening member comprising a layer of resin material capable of transmitting a laser beam therethrough, said intervening member being disposed at and held between the juncture of said unit body member and said unit tip member, whereby during use of the laser processing apparatus for processing a workpiece with a laser beam via said laser emission unit spatters formed from workpiece are inhibited from adhering to the concentrating lens.

According to another aspect of the present invention, the improvement of a laser emission unit for use with a processing apparatus comprises an intervening member comprising a resin layer transmissive to the concentrated laser beam disposed in the path of the concentrated laser beam downstream of the concentrating lens, whereby spatter created upon irradiation of the workpiece with the concentrated laser beam will be effectively prohibited from impinging on and adhering to the concenrating lens.

According to another aspect of the present invention, a method for increasing the useful life of a concentrating lens in a laser emission unit of a laser processing apparatus for treating a workpiece with a laser beam generated by the laser processing apparatus and passing through the laser emission unit and the concentrating lens, comprising providing an intervening member comprising a resin layer transmissive to laser beam irraditation in the path of the laser beam and between the concentrating lens and the workpiece.

### BRIEF DESCRIPTION OF THE DRAWINGS

Fig. 1 is a half sectional view showing the structure of a laser beam emission unit of a laser machining apparatus according to one embodiment of the present invention;
Fig. 2 is a schematic diagram showing the laser machining apparatus according to the embodiment of the present invention;
Fig. 3 is a graph showing a relationship between variations in the laser beam output and the number of beads drawn in the embodiment of the present invention;
Fig. 4 is a graph showing a relationship between variations in the laser output and variations in the number of beads drawn in a comparative example;
Fig. 5 is a sectional view showing an intervening member according to the present invention; and
Fig. 6 is a sectional view showing another intervening member according to the present invention;

### DESCRIPTION OF THE PREFERRED EMBODIMENT

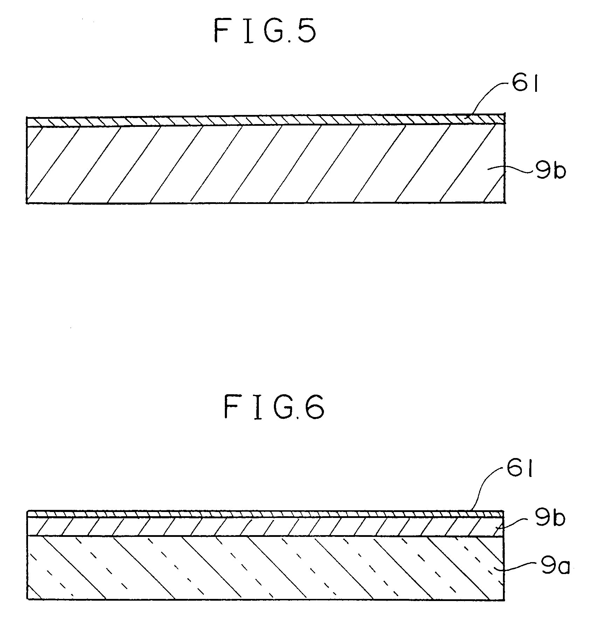

In the present invention, as shown in the embodiment of Fig. 5 an intervening member includes plastic plate 9b made of a resin material and an anti-reflection coating 61 on its one face. The anti-reflection coating 61 improves the light transmittance of the intervening member as a whole to thereby allow irradiation of a workpiece with a higher energy density laser beam. In particular, where the anti-reflection coating 61 is provided on the face of the plastic plate 61 on the side of the workpiece, the temperature rise of the intervening member due to laser beam absorption can be much reduced.

The resin materials used as the intervening member are polycarbonate resin, polymethyl methacrylate resin, diallyl carbonate resin, polystyrene resin, poly4-methyl-1-pentane resin (TPX), AS resin (styrene-acrylonitrile copolymerizate), MS resin (styrene-MHA copolymerizate), hard chloroethylene resin, kind of ethylene-tetracycrododecene copolymerizate, which are transparent at a YAG laser beam wavelength of 1064 nm. Preferable resin material is polycarbonate, polymethylmetacrylate, diallylcarbonate. The thickness of resin member may be the range of preferably 10 µm - 10mm, more preferably 100µm - 1mm.

The anti-reflection coating film may be formed by depositing an inorganic or organic film such as a dielectric film on the intervening member in a single layer or multiple layers by such techniques as vacuum evaporation, sputtering and spin coating. The organic film may be made of fluororesins such as Sytop (trade name) and Teflon AF (trade name).

The inorganic film may be made, for example, of fluorides such as LiF, MgF₂, ThF₄, LaF₃, NdF₃ and CeF₃, oxides such as SiO₂, SiO, Al₂O₃, MgO, ThO₂, La₂O₃, CeO₂, Ta₂O₅, TiO₂ and SnO₂, or other compounds such as ZnS, CdS, ZnSe, ZnTe, Sb₂S₃.

The inorganic film may be deposited on the layer of resin material by such techniques as evaporation and sputtering.

The anti-reflection coating 61 may be formed on both faces of the plastic plate 9b rather than on its one face.

In an alternative embodiment shown in Fig.6, the intervening member may be composed of a glass plate 9a and a resin layer 9b that is applied at least to one face thereof. That is, forming the resin layer 9b on the conventionally known glass-plate member has the effect of restraining adhesion of spatters without causing any changes in the internal structure of an existing laser beam emission unit. Resin film may be coated of the glass plate by any coating method such as spin coating method.

Obviously, an anti-reflection coating 61 may further be provided on the resin layer 9b as shown in Fig. 6, and/or on the glass plate.

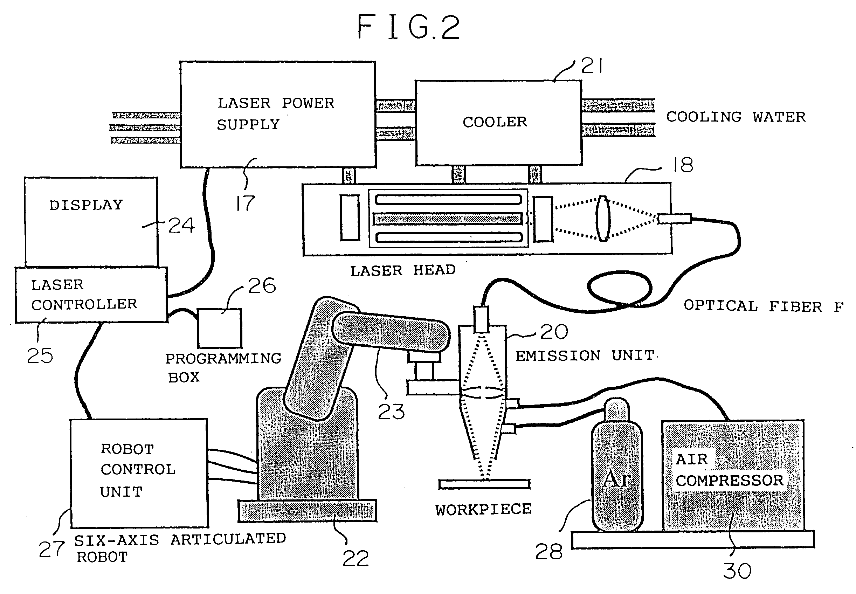

A laser machining apparatus used in a referral embodiment of the present invention is schematically shown in Fig. 2. The laser machining apparatus in this embodiment is a combination of a pulsed YAG laser device and a six-axis articulated robot.

As shown in Fig. 2, the laser machining apparatus has a laser head 18 composed of a Nd:YAG rod, a pumping flash lamp, and other known components. A laser power supply 17 for supplying oscillating power and a cooler 21 for preventing overheating of the laser head 18 are connected to the laser head 18.

The Nd:YAG rod of the laser head 18 is adapted to perform multi-mode oscillation to irradiate a laser beam with a central wavelength of 1.06 µm, which is guided to an emission unit 20 through an optical fiber F. Connected to the laser beam emission unit 20 is a gas supply source (an argon gas cylinder 28 and an air compressor 30), which is capable of feeding a predetermined amount of gas into the nozzle of the emission unit 20. The emission unit 20 is fixed to the tip of an arm 23 extending from a head table 22 that constitutes the six-axis articulated robot, and subjected to control in the X, Y, and Z directions by a robot control unit 27.

The robot control unit 27 is subjected to programming control by a laser controller 25 equipped with a display 24 and a programming box 26.

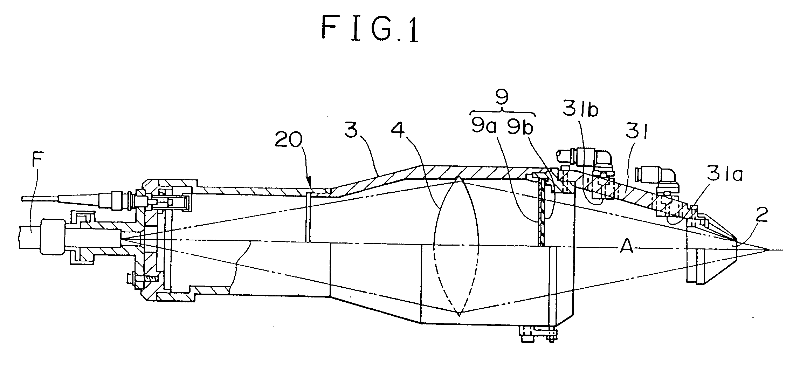

The structure of the laser beam emission unit 20 described in connection with Fig. 2 is illustrated in more detail in Fig. 1.

As shown in Fig. 1, the body of the emission unit 20 incorporates a concentrating lens 4, which is adapted to condense a laser beam for emission from a laser beam exit 2. In this embodiment of the present invention, the emission unit 20 is adapted to have a focal length of 120 mm and a concentrating angle of within 15 mrad.

In this embodiment of the present invention, the emission unit 20 is structured so as to be divided into a unit body 3 in a hollow cylindrical shape and a unit tip portion 31 in an inversely tapered shape. The laser beam exit 2 is mounted on the tip of the unit tip portion 31.

The inner wall of the unit tip portion 31 is provided with a first gas inlet 31b and a second gas inlet 31a, which provide air blows perpendicular to the laser beam optical axis in an intra-unit space A. The tip of the laser beam exit 2 is shaped into a circular double nozzle, through which a shield gas such as nitrogen, argon, hydrogen, or helium is irradiated toward a workpiece.

The above-described intervening member 9 composed of the glass member 9a (glass plate) and the resin member 9b (resin plate) that is provided on one face thereof is detachably mounted at the division boundary of the unit body 3 and the unit tip portion 31 so as to be held therebetween. The intervening member 9 separates the inner space of the unit body 3 from that of the unit tip portion 31. Thus, the intervening member 9 can be removed and replaced by separating the unit body 3 and the unit tip portion 31.

In this embodiment of the present invention, the laser machining apparatus was applied to superposed welding of galvanized steel plates under the following laser irradiation conditions:

| | |
|---|---|
| Laser output: | 356 W |
| Pulse repetition frequency: | 10 Hz |
| Pulse energy: | 35.6 J |
| Welding speed: | 500 mm/min |
| Welding bead length: | 20 mm |
| Working position: | Focal position |
| Image side focal length: | 120 mm |
| Image side concentrating angle: | 14.4 degrees |
| Shield gas: | Nitrogen (15 ℓ/min) |
| Flow rate of air blow: | Approx. 400 ℓ/min |

Materials to be welded were three galvanized steel plates (JIS G3302 SGCC SDN) superposed on one another with a gap of 0 mm, each with a minimum nominal weight of F08 (60/60 g/cm² on both sides), a length of 100 mm, a width of 30 mm, and a thickness of 0.7 mm.

Only the first two plates were actually welded together because the above welding conditions are so set to prohibit a laser beam from penetrating through the second plate. Further, settings were also made in such a manner that a glass member 9a (2.0 mm thick) made of quartz with an antireflection(AR) coating on both faces thereof could be placed at a position approximately 100 mm distant from the welding materials between the concentrating lens 4 and the welding materials.

A resin member 9b, which is provided on both faces thereof with an anti-reflection inorganic film coating, was mounted on the face of the glass member 9a on the side of the workpieces. The resin materials used in the present embodiment were polycarbonate, polymethyl-methacrylate, and diallylcarbonate, whose thicknesses and spectral transmittances (transmittances at a YAG laser beam wavelength of 1064 nm) are shown in Table 1.

| Name of resin material | Thickness(mm) | Transmittance(%) |
|---|---|---|
| Polycarbonate | 0.5 | 98.8 |
| Polymethyl-methacrylate | 1.0 | 98.7 |
| Diallylcarbonate | 0.4 | 99.3 |

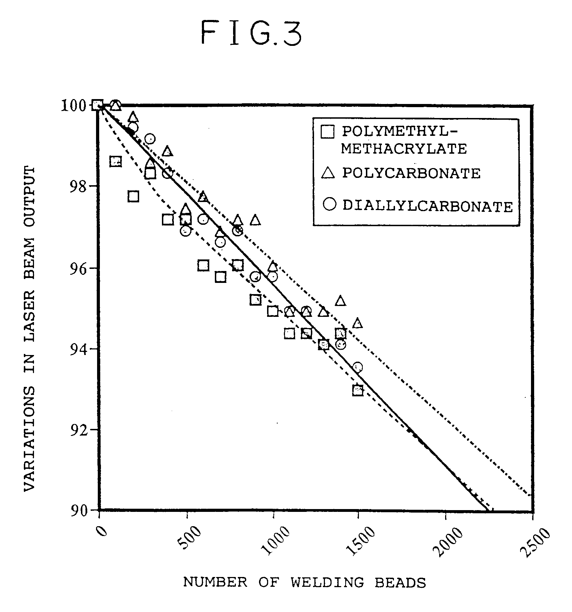

In this embodiment, the respective resin materials were placed in the emission unit, and the laser beam output and a variation of the transmittance were measured for every 50 welding beads. Measurement results are shown in Fig. 3. 2300 to 2600 welding beads could be drawn until a 10% decrease occurred in the transmittance.

In the present embodiment, the resin member is provided on both faces thereof with the anti-reflection inorganic film coating. But it may be provided only on one face thereof with such a coating or provided with no such coating.

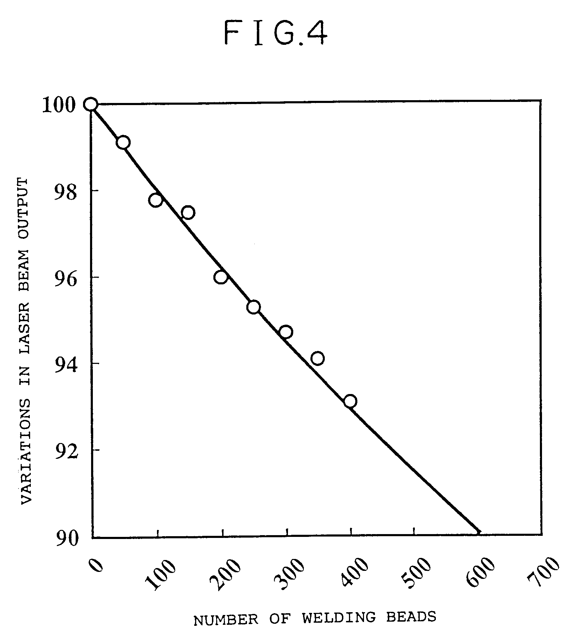

For comparison, measurements were made using only the glass member, i.e., without using the resin member under the same welding conditions as in the above embodiment. Results are shown in Fig. 4. Only 500 to 600 welding beads could be drawn until a 10% decrease occurred in the transmittance. The life of the glass member was decreased by a factor of 4 to 5 as compared with that in the above embodiment using both the glass member and the resin member.

## Claims

1. In a laser emission unit for use with a laser processing apparatus for treating a workpiece by irradiation with a laser beam, wherein the unit includes a body having a laser beam passage space, an input opening at one end of said body for receiving a laser beam, a laser beam outlet opening at the opposite end of said body for emitting the laser beam, and a concentrating lens for condensing a laser beam passing therethrough and interposed between the input opening and the outlet opening,
the improvement comprising,
an intervening member comprising a layer of resin material capable of transmitting a laser beam therethrough, said member being positioned between the concentrating lens and the workpiece, whereby the intervening member protects the concentrating lens from spatters generated upon irradiation of the workpiece with the laser beam during operation of the laser processing apparatus.

2. The laser emission unit of claim 1, wherein said intervening member is positioned within said body between the concentrating lens and the outlet opening.

3. The laser emission unit of claim 1, wherein said intervening member has a light transmittance of at least 80% at a wavelength of a laser beam passing therethrough.

4. The laser emission unit of claim 1, wherein said intervening member further comprises an anti-reflection coating on at least one face of the resin layer.

5. The laser emission unit of claim 1, wherein said intervening member further comprises a glass plate interposed between the concentrating lens and the resin layer.

6. The laser emission unit of claim 5, wherein the resin layer is deposited on one surface of the glass plate.

7. The laser emission unit of claim 6, wherein a second resin layer is deposited on the opposite surface of the glass plate.

8. The laser emission unit of the claim 5, further comprising an anti-reflection coating on at least one surface of the resin layer.

9. The laser emission unit of claim 1, wherein the resin layer is formed from a resin material selected from a group consisting of polycarbonate resin, polymethyl methacrylate resin, and diallycarbonate resin.

10. A laser emission unit of a laser processing apparatus for processing a workpiece, said unit comprising;
a unit body member having an input opening at one end thereof receiving a laser beam and a second opening at the opposite end thereof,
a concentrating lens disposed within said body member for concentrating a laser beam passing through said body member,
a unit tip member removably connected to said unit body member, said unit tip member having a first open end removably connectable to said unit body member and a second open laser beam outlet end, and
an intervening member comprising a layer of resin material capable of transmitting a laser beam therethrough, said intervening member being disposed at and held between the juncture of said unit body member and said unit tip member,
whereby during use of the laser processing apparatus for processing a workpiece with a laser beam via said laser emission unit spatters formed from workpiece are inhibited from adhering to the concentrating lens.

11. The laser emission unit of claim 10, which further comprises a laser beam exit member mounted to the second open end of the unit tip member.

12. The laser emission unit of claim 10, wherein the intervening member comprises a glass plate having a first surface facing towards the concentrating lens and a second surface facing towards the second opening and the resin layer deposited on the second surface.

13. The laser emission unit of claim 12, wherein the intervening member further comprises a second resin layer transmissive to the laser beam deposited on the first surface of the glass plate.

14. In a laser processing apparatus including a laser head for generating a laser beam, a laser emission unit having a concentrating lens disposed therein for condensing a laser beam passing therethrough to a workpiece to be treated with the laser beam, and means for transmitting the laser beam from the laser head to the laser emission unit,
the improvement comprising an intervening member comprising a resin layer transmissive to the concentrated laser beam disposed in the path of the concentrated laser beam downstream of the concentrating lens, whereby spatter created upon irradiation of the workpiece with the concentrated laser beam will be effectively prohibited from impinging on and adhering to the concentrating lens.

15. The laser processing apparatus according to claim 14, wherein said intervening member comprises the resin layer adhered to a surface of a glass plate.

16. The laser processing apparatus according to claim 14, wherein the intervening further comprises an anti-reflective coating deposited on at least one surface of the resin layer.

17. A method for increasing the useful life of a concentrating lens in a laser emission unit of a laser processing apparatus for treating a workpiece with a laser beam generated by the laser processing apparatus and passing through the laser emission unit and the concentrating lens, comprising providing an intervening member comprising a resin layer transmissive to laser beam irradiation in the path of the laser beam and between the concentrating lens and the workpiece.

18. The method of claim 17 which comprises providing the intervening member in the laser emission unit between the concentrating lens and the outlet end of the unit.
